Europäisches Patentamt

**European Patent Office**

**Office européen des brevets**

(19)

(11) Publication number: **0 047 043**

**A2**

(12)

# EUROPEAN PATENT APPLICATION

(21) Application number: **81200956.1**

(22) Date of filing: **28.08.81**

(51) Int. Cl.³: **A 01 K 31/04**
**A 01 K 31/17**

(30) Priority: **29.08.80 NL 8004940**

(43) Date of publication of application:
**10.03.82 Bulletin 82/10**

(84) Designated Contracting States:
**BE DE FR GB IT NL SE**

(71) Applicant: **van der Veer, Harry Matheus**
**Beeklandseweg 8**
**NL-8181 NB Heerde(NL)**

(72) Inventor: **van der Veer, Harry Matheus**
**Beeklandseweg 8**
**NL-8181 NB Heerde(NL)**

(74) Representative: **Morel, Christiaan F., Dr.Ir.**
**MORELPATENT Laarstraat 3**
**NL-8166 GR Emst (Epe)(NL)**

(54) Ventilation system for an animal house.

(57) A ventilation device of an air circulation system for an animal house and, more specifically, for poultry such as lay-hens brooding and rearing poultry which are confined in cages, with a floor (7) which is foraminous so that it will let through the droppings and underneath it, comprises a conveyor (8) to collect and transport the droppings of the animals, of which the space (20) bounded by the conveyor belt, has been closed at both sides such, that it is part of the circulation system.

Fig:2

EP 0 047 043 A2

- 1 -

## Ventilation system for an animal house

The invention relates to a ventilation device or an air circulation system for an animal house and more specifically for poultry such as lay-hens, brooding and rearing poultry, which are confined in cages with a floor which is foraminous, so that it will let through the droppings, and underneath the latter a conveyor to collect and transport the droppings of the animals.

Animal houses with a plurality of banks of cages are generally known. The cage floors will be foraminous and may preferably be reticulate. Underneath the cages in which the animals are confined, a conveyor is installed to collect the droppings. The manure is regularly removed from the moving conveyor belt , for example, by means of a scraper which could be mounted near the end of the conveyor. The thus accumulated manure will be rather humid, and thus be difficult either to strew or spread or to stack while last but not least humid manure is smelly.

From United States Patent No. 3.385.266 it is known to provide air-moving means to establish an air flow in order to dry the animal droppings before they will be fed to treatment means or be stacked. With said air-moving means, towit a plurality of blowers, an air flow is provided. Such a manure handling system, demands a large number of blowers and as preferably the strips with the manure have to float upon an air cushion, causes such a system to be expensive. It also is important that nowhere in the animal house the air flow will . . tend to have the animals sit in a draught. Especially poultry is very sensitive to draught.

It is an object of the invention to provide an air flow of such a character that it causes animal droppings to get dry. It is another object of the invention that the air is distributed in the animal house such that the fresh air flow will nowhere cause a draught near the animals, which will be extremely important especially during wintertime.

It is still a further object of the present invention that the fresh-air is distributed such that it enters everywhere in the animal house near the cages.

This object is achieved in accordance with the present invention in that the space limited by the conveyor belt at the upper-, lower-, back- and foreside, has been closed at both sides by closing means such that the section of the conveyor belt at the upper side and the section of the conveyor belt at the lower side lean on, led over, slide over or float on the closing means, while a port in the closing means forms an inlet for the air into the enclosed space and that means are present with the aid of which the inside of the space is kept at a higher pressure than at the outside.

Such closing means could comprise two U-profile elements of the dimensions of the conveyor which are mounted on both sides of the conveyor belt such, that the base of each of the U-profile elements closes one of the sides of the space bounded by the conveyor belt, while the two borders of the upper- and lower section or part of the conveyor belt are supported by one of the legs of one of the U-profile elements. The effect of the use of closing means and maintaining an overpressure inside the space is that the lower section of the conveyor belt will be continuously pressed against the closing means, i.e. one of the legs of the U-shaped element, so that no air will escape at this spot of the enclosed space, while the upper section of the conveyor belt is released from or runs over the closing means but free from it, so that at both sides of the upper section of the conveyor belt a small airflow can escape from the enclosed space along the length of the conveyor.

The upper section floats upon an air cushion.

The effect of mounting guide strips above the borders of the conveyor belt and preferably at an angle with the horizontal plane along the length of the conveyor is that the air flow which escapes from the enclosed space inside the conveyor is guided over the upper side of the belt so that said air flow will have a good contact with the droppings. Another advantage of the guide strips is that the borders of the conveyor belt stay clean from droppings so that no droppings of the animals will cause the belt to press too heavy on the legs of the closing means which could cause an interruption of the said air flow.

If the pressure means comprise a fan and an inlet channel which connect the port or inlet from each enclosed space with the ambient air and/or the inside of the animal house, the ambient air which is directed towards the enclosed spaces, can possibly partly be mixed with air from the animal house, which has been preheated by the animals.

When in an animal house of several levels each conveyor under each bank of cages is enclosed and if all enclosed spaces of the conveyors are at an overpressure in relation to the environment the flow of air will enter the animal house everywhere near the cages but will                be so small that the animals will not sit in a draught. This is especially of great importance during wintertime when it is extremely cold, as the animals would catch a cold and die when it would cool down locally too strongly.

The ventilation system according to the invention is simple, in-expensive and causes the manure to dry without the animals sitting in a draught.

The invention will be illustrated, with the aid of the drawings, wherein:

Fig. 1 is a fragmentary view, partly in section, of an animal housing       of three levels, with on each level two banks of cages;

Fig. 2 is a sectional view of two cages of an animal housing with an air ventilation system according to the present invention;

Fig. 3 is a sectional view of an animal housing with an air ventilation system according to the invention, the inside of the animal housing being at a subatmospheric pressure;

Fig. 4 is a sectional view of an animal housing with an air ventilation system according to the present invention, comprising an air recirculation system;

Fig. 5 is a sectional view of an animal housing with an air ventilation system according to the present invention, the animal housing, having pressure above the atmospheric one.

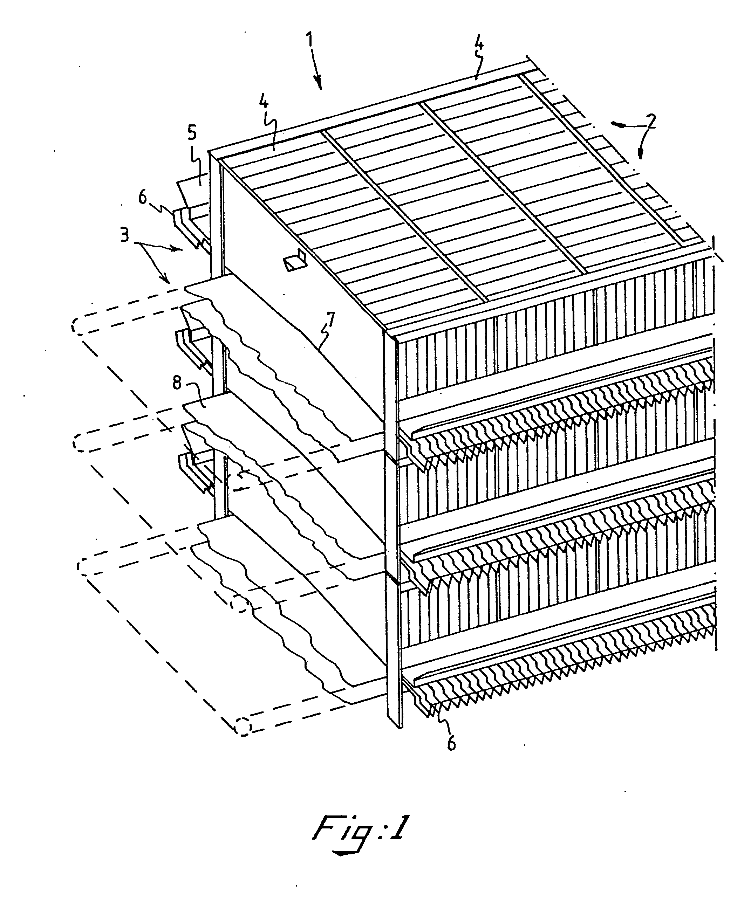

Fig. 1 shows partly in sectional view an animal housing 1 with on each level 3 two banks 2 of cages 4. Along the whole length of each level 3 is suspended a feeding  trough 5 and a gutter 6 so as to collect the eggs. Under the floors 7 of the cages along the length of each bank of cages runs a conveyor 8 for collecting and transporting the manure.

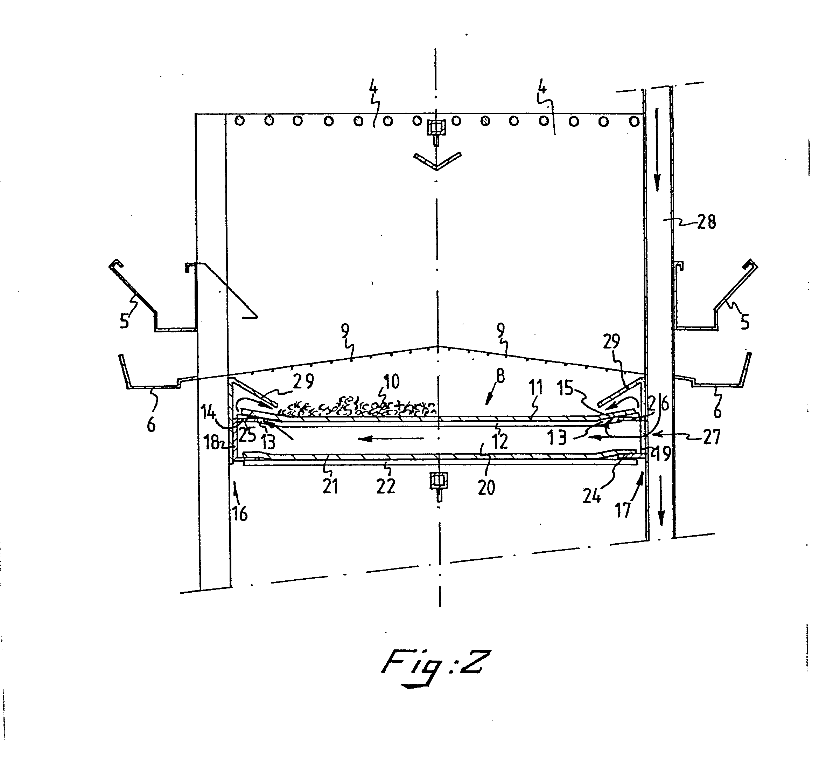

Fig. 2 shows a sectional view of two banks of cages 4 with the feeding trough 5 and the gutter 6 for collecting the eggs. The floors of the cages are foraminous and made from wire mesh 9 so droppings and other rubbish 10 can easily pass said floor and fall out of the cages, resulting in the poultry not having to walk around in their own manure. Also in sectional view is shown the conveyor belt 8 which is part of the air ventilation system and which serves to collect the rubbish 10 and droppings and to transport it to a depot or store for the manure. The section or part 11 of the conveyor belt or manure belt 8, which is at the upper side, runs over a plurality of guide bars 12, which slant near the ends 13 causing the borders 14, 15 of the upper section 11 of the manure belt to be kept inclined with relation to the middle part of the conveyor belt so that the manure will not fall from the belt.

Near the borders of the conveyor belt are mounted U-profile elements 16, 17 of which the bases 18, 19 are the side walls of the space 20, enclosed by the conveyor belt 8. The section 21 of the conveyor belt 8 which is at the lower side, runs also over guide bars 22 and one of the legs 23, 24 of each of the profile elements 16, 17, while the upper section 11 of the manure or conveyor belt 8 runs over the other leg 25, 26 of each of the U-profile parts 16, 17. By means of a channel 28 and a port 27 in one of the profile elements 17 air flows inside the enclosed space. If in the space 20 higher pressure prevails with respect to the outside of the conveyor belt, the air inside the space 20 shall try to flow away. As the borders of the lower section 21 of the conveyor belt 8 run over the legs 23, 25 of the profile elements 16, 17, this borders will be pressed against said legs whereby the space 20 at the lower part becomes air tight. At the upper side of the space 20 the borders of the upper section 11 of the conveyor belt 8 run over the legs 25, 26 of each of the profile elements 16, 17, but if the pressure becomes higher inside than outside the space 20, the borders of the conveyor 8 will be pushed upwards, resulting in air escaping evenly along the entire length of the belt 8. Hereby there is a flow of air near the droppings of the poultry which will remove rapidly the humidity from the manure.

In a preferred embodiment of the ventilation system according to the invention, above the borders of the upper section 11 of the conveyor belt are mounted guide means or guide strips 29, causing the flow of air which flows out of the space 20 to be guided over the manure. This is a great advantage, for the droppings falling on to the conveyor belt will come directly in contact with the fresh air. From this it results that the humidity is taken out the manure quickly so that the weight of the manure decreases and becomes lighter which makes said manure easy to handle or to strew whilst it will hardly smell. Another aim of the guide strips 29 is that the borders of the upper section 11 of the conveyor belt will not become heavier by dropped manure which could cause the pressure of the borders on the legs of the profile elements to become irregular, the result of which would be an irregular flow of air along the entire length of the conveyor.

In figures 3, 4 and 5 is shown schematically in sectional view an animal house 30 in which are placed near each other a plurality of banks of which each bank has three levels. The figures show three possibilities of embodiments of an air ventilation system according to the invention. In the embodiment of the animal house 30 shown in figure 3 the air is drawn out of the animal house by means of a blower or fan 31 so that the pressure inside is subatmospheric; owing hereto ambient air is sucked in through the channels 32, 33 and flows inside the animal house 30 by means of the conveyor 34.

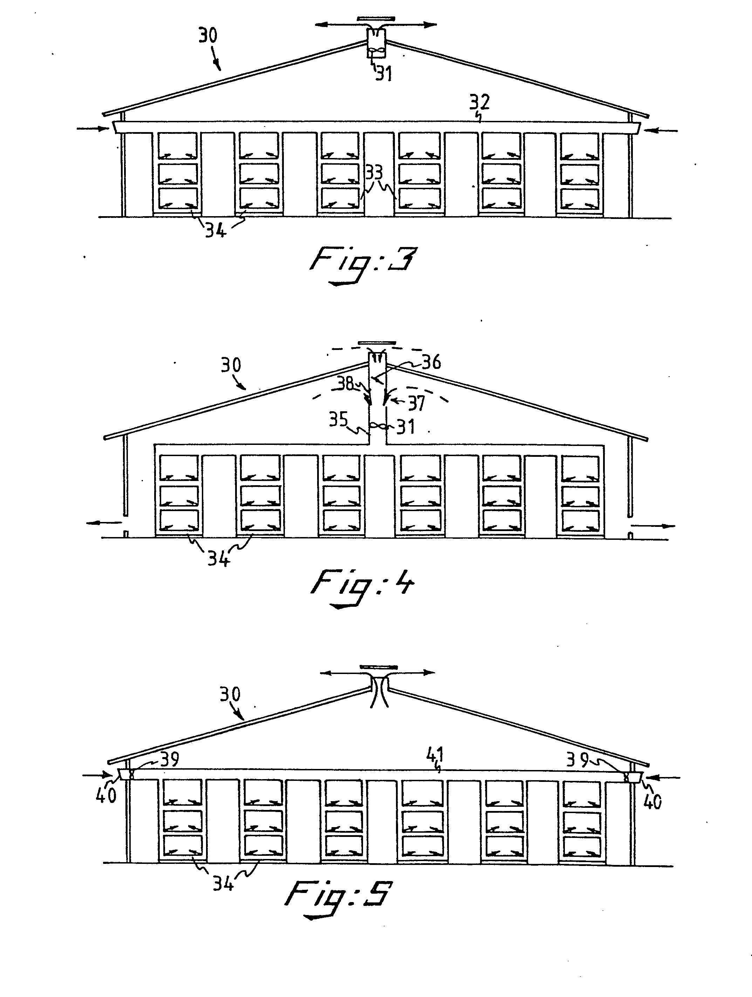

Fig. 4 shows an air ventilation system, in which by means of a fan 34 fresh air is sucked in through a chimney or funnel 35. Inside the chimney 35 there is a movable shutter or valve 36 and two parts 37 with a movable shutter 38. Proportionally to the position of the movable shutter 36 more or less fresh air will be sucked in from the outside and in consequence less or more air is sucked in through the movable shutter 38 from the inside of the animal house. The advantage of this system is that fresh air can possibly be mixed with preheated air from the animal housing while the capacity of the fan stays unchanged.

As the systems shown in the figures 3 and 4, likewise the system shown in figure 5 will distribute the air evenly through the animal house; in this embodiment of the air ventilation system the blowers 39 are mounted near the inlet 40 of the channels 41. In the embodiment shown in figures 4 and 5, this contrary to the system shown in figure 3, the pressure inside the animal house is higher than the atmospheric pressure. The difference in pressure depends on the capacity of the blowers. It is an additional advantage that the dimensions of the inlet openings of the conveyors will automatically be adapted to the amount of the difference in pressure.

If it is extremely cold, a number of blowers or fans can be switched off or the capacity decreased so that an even inlet of the air in the animal housing will be maintained.

As the air is blown over the manure from both sides of the conveyor belt which causes the manure to drie up quickly, an environment friendly product is obtained, which can be easily handled and stored.

How efficiently the manure will dry depends amongst others on the humidity and the temperature of the air. As it is possible with the air ventilation system according to the invention, to use dry and/or warm fresh air as well as warm air from the inside, preheated or dried air, it is possible to obtain an effective drying of the manure at all seasons during the year.

An overpressure inside the enclosed space between the conveyor belt can be obtained by:

a. using blowers which keep the inside of the animal house at a pressure which is subatmospheric and by connecting the inlet channels with the fresh air. The difference in pressure between the inside and the outside of the animal house will provide an even air distribution along the total length of the banks of cages;

b. using blowers in the inlet channels, which cause an even distribution (recirculation) of the warm air from the inside of the animal housing along the over-all length of the conveyors;

c. using blowers in the inlet channels for fresh air;

d. using a combination of the systems of b. and c., while partly fresh air and/or warm inside air can be distributed by using movable shutters or valves;

e. using a source of heat in the inside of the air ventilation system according to a., b., c. or d.

The aim of the air distribution in the inside of the animal housing by means of an air ventilation system according to the invention is also to bring fresh air, warm recycled air oℜ preheated air directly near the animals, so as to always have air being rich of oxygen and if desired, preheated air near the animals, especially if the number of animals is large and at some spots highly concentrated.

The arrows in the figures 2, 3, 4 and 5 show the direction of the air flow when the blowers are switched on. The dotted lines in figure 4 show the possible air flows, depending on the position of the movable shutters.

Claims:

1.     A ventilation device or an air circulation system for an animal house and more specifically for poultry such as lay-hens, brooding and rearing poultry, which are confined in cages with a floor which is foraminous so that it will let through the droppings, and underneath the latter a conveyor to collect and transport the droppings of the animals, characterized in that the space (20) bounded by the conveyor belt (8) at the upper, lower, back and fore side has been closed at both sides by closing means (16, 17) such that the section of the conveyor belt at the upper side (11) and the section of the conveyor belt at the lower side (21) lean on, led over, slide over or float on the closing means, while a port (27) in the closing means forms an inlet for ambient air in the enclosed space and in that due to the presence of means, the inside of the enclosed space is kept at a higher pressure than the outside.

2.     A ventilation device according to claim 1 of which the closing means comprise two U-profile elements (16, 17) of the length of the conveyor (8) which are mounted on both sides of the conveyor belt such that each of the bases of the U-profile elements closes one of the sides of the space bounded by the conveyor belt, while each of two borders of the upper- and lower section or parts of the conveyor belt is supported by one of the legs of one of the U-profile elements.

3.     A ventilation device according to claim 1 or 2 , in which above the borders of the conveyor belt there have been mounted slanting guide strips (29) along the whole length of the conveyor.

4.     A ventilation device according to one of the claims 1 or 2 of which the pressure means comprises a fan (34) or

- 2 -

blower (39) and an inlet channel (40) which interconnects the port or inlet of each enclosed space with the outside.

Fig:1

*Fig:2*

0047043

- 3/3 -

Fig:3

Fig:4

Fig:5